# EUROPÄISCHE PATENTSCHRIFT

(11) **EP 3 756 780 B1**
(45) Veröffentlichungstag und Bekanntmachung des Hinweises auf die Patenterteilung: **10.07.2024**
(21) Anmeldenummer: 20173382.1
(22) Anmeldetag: 07.05.2020
(51) Int. Cl.: B21D 22/24, B29C 53/18

(54) **VERFAHREN ZUR ERZEUGUNG EINES GESCHWÄCHTEN MATERIALABSCHNITTS IN EINEM BAUTEIL**
METHOD OF FORMING A WEAKENED SECTION OF MATERIAL IN A COMPONENT
PROCÉDÉ DE PRODUCTION D'UNE PARTIE DE MATIÈRE AFFAIBLIE DANS UN COMPOSANT

(30) Priorität: 27.06.2019 DE 102019117286
(43) Veröffentlichungstag der Anmeldung: 30.12.2020
(73) Patentinhaber: Zumtobel Lighting GmbH, 6850 Dornbirn (AT)
(72) Erfinder: Kohler, Christian, 6850 Dornbirn (AT); Rümmele, Gerhard, 6850 Dornbirn (AT)
(74) Vertreter: Kiwit, Benedikt

(56) Entgegenhaltungen:
- JP-A- S62 148 027
- US-A1- 2009 205 390
- US-A1- 2019 184 442

## Beschreibung

Die vorliegende Erfindung betrifft ein Verfahren zur Erzeugung eines geschwächten Materialabschnittes in einem dünnwandigen Abschnitt eines Bauteils, wie eines Leuchtengehäuses oder eines Leuchtenkomponentengehäuses oder eines beliebigen anderen Bauteils, sowie ein mit diesem Verfahren hergestelltes Bauteil und zudem ein Bauteilsystem, wie eine Leuchte, aufweisend das erfindungsgemäße Bauteil.

Es ist aus dem Stand der Technik bekannt, Bauteile mit dünnwandigen Abschnitten (bspw. aus Blech oder Kunststoff) beispielsweise als Leuchtengehäuse und dergleichen herzustellen bzw. bereitzustellen. Diese weisen in der Regel Durchgangsöffnungen auf, um in diesen Durchgangsöffnungen beispielsweise selbstschneidende Schrauben zur Befestigung weiterer Bauteile (bspw. Leuchtenkomponenten wie Treiber, Leuchtmittel, etc.) an dem Bauteil aufzunehmen. Auch können derartige Durchgangsöffnungen zum Durchführen von Verkabelung und dergleichen dienen. Aus unterschiedlichen Gründen kann es dabei erforderlich sein, ungenutzte Löcher, welche beispielsweise in einem Standardbauteil vorgesehen sind, bei bestimmten (Leuchten-)Spezifizierungen zu verschließen; dies beispielsweise mittels Schrauben oder separaten Dichtelementen. Dies kann beispielsweise deswegen vonnöten sein, um dem Bauteil eine definierte Schutzklasse zu verleihen; beispielsweise IP50 (Staubschutzdichtung) oder größer.

Bisweilen war es auch notwendig, für jede Spezifikation beispielsweise eines Leuchtengehäuses unterschiedliche Typen mit entsprechend vorgesehenen Löchern vorzuhalten, um eben das Vorsehen zusätzlicher Elemente zum Verschließen ungenutzter Löcher zu vermeiden.

Das Dokument JP S62 148027 A zeigt ein Herstellungsverfahren für Gehäuse. Die Gehäuse werden dabei aus Blech hergestellt. Ziel des Verfahrens ist die Herstellung einer kreuzförmigen Vertiefung in einem Bereich des Bleches. Dabei wird der Bereich des Bleches zunächst mittels eines im Wesentlichen runden Stempels in eine erste Richtung geprägt, und anschließend mittels eines kreuzförmigen Stempels in eine entgegengesetzte zweite Richtung geprägt. Dies verhindert unbeabsichtigte Verformungen während des zweiten Prägeprozesses.

Es ist somit eine Aufgabe der vorliegenden Erfindung, ein Verfahren zur Erzeugung eines geschwächten Materialabschnitts in einem Bauteil sowie ein damit hergestelltes Bauteil und Bauteilsystem bereitzustellen, welche eine einfache Bereitstellung von Durchgangsöffnungen in dem Bauteil bei Nutzung einer hohen Gleichteilezahl sowie Verringerung der Teilezahl insgesamt ermöglichen.

Die gegenwärtige Erfindung wird durch die unabhängigen Ansprüche definiert. Vorteilhafte Weiterbildungen werden von den abhängigen Ansprüchen gezeigt.

Gemäß einem ersten Aspekt betrifft die vorliegende Erfindung ein Verfahren zur Erzeugung eines Geschwächten Materialabschnittes in einem Bauteil, aufweisend die folgenden Schritte:
a) Bereitstellen eines Bauteils mit wenigstens einem dünnwandigen Abschnitt (das Bauteil kann also partiell oder ganz entsprechend dünnwandig ausgebildet sein),
b) Tiefziehen eines Prägungsabschnittes des dünnwandigen Abschnitts aus einer Bauteilebene des dünnwandigen Abschnitts mit einem Stempel in eine Tiefziehrichtung bevorzugt senkrecht zur Bauteilebene des dünnwandigen Abschnitts, wobei der Stempel in Tiefziehrichtung gesehen einen Querschnitt mit über den Umfang verteilt abwechselnden Vorsprüngen und Rücksprüngen aufweist, und
c) Umformen des Bauteils derart (bspw. mittels einer Presse vorzugsweise mit zwei gegenüberliegenden Pressplatten), dass der tiefgezogene Prägungsabschnitt wieder in die Bauteilebene des dünnwandigen Abschnitts zurückbewegt (also (plastisch) umgeformt) wird, so dass ein geschwächter Materialabschnitt mit im Wesentlichen der Querschnittsform des Stempels im Bauteil erzeugt wird.

Unter "mit im Wesentlichen der Querschnittsform" ist im Rahmen der vorliegenden Erfindung zu verstehen, dass die Querschnittsform insofern beibehalten wird, wie es die plastische Verformung des Bauteilmaterials bei der vorbeschriebenen Umformung des Bauteils zulässt. In jedem Fall lässt sich die grundsätzliche Querschnittsform des Stempels auch in dem geschwächten Materialabschnitt wiedererkennen. Unter "geschwächter Materialabschnitt" wird ein entsprechender Prägungsabschnitt des Bauteils verstanden, der aufgrund der Umformschritte (Tiefziehen und Umformung zurück in Bauteilebene des dünnwandigen Abschnitts) gegenüber den umliegenden bzw. nicht umgeformten Bauteilabschnitten geschwächt ist; bspw. verdünnte Bereiche mit einer Materialstärke kleiner als die Materialstärke des Bauteils wenigstens im dünnwandigen Abschnitt aufweist.

Mittels dieses erfindungsgemäßen Verfahrens wird somit ein geschwächter Bereich (Materialabschnitt) in dem Bauteil erzeugt, welcher den Vorsprüngen und Rücksprüngen entsprechende Rücksprungabschnitte und Vorsprungabschnitte aufweist. Mittels des so bereitgestellten geschwächten Materialabschnittes kann dieser bei Bedarf entsprechend einfach aus dem Bauteil entfernt und somit eine Durchgangsöffnung bereitgestellt werden, die auf unterschiedliche Weise genutzt werden kann. Dabei ermöglicht insbesondere die die Vorsprungabschnitte und Rücksprungabschnitte aufweisende Form des geschwächten Materialabschnitts ein einfaches Herauslösen desselben. Zudem kann die so bereitgestellte Form auch anderweitig, wie im Weiteren beschrieben, auf zahlreiche Weise genutzt werden. Insbesondere ermöglicht es jedoch das erfindungsgemäße Verfahren bereits, entsprechende geschwächte Materialabschnitte bereitzustellen, auch wenn diese zunächst nicht genutzt werden bzw. nicht alle genutzt werden. So können bspw. mehrere geschwächte Materialabschnitte an definierten Bereichen in dünnwandigen Abschnitten eines Bauteils bereitgestellt werden. Wahlweise können dann diese geschwächten Materialabschnitte entfernt werden, wo die Erzeugung einer Durchgangsöffnung erforderlich ist. Wo keine Durchgangsöffnungen benötigt werden, verbleiben die geschwächten Materialabschnitte in dem Bauteil. Somit können in einfacher Weise in einem einzigen Bauteil für unterschiedliche Spezifikationen desselben zahlreiche mögliche Durchgangsöffnungspositionen in einem Blech bereitgestellt werden, welche dann wahlweise eingebracht (also durch Herauslösen des geschwächten Materialabschnittes geöffnet) werden. Da in Bereichen, die keine Durchgangsöffnungen erfordern, der geschwächte Materialabschnitt verbleibt, sind hier keine zusätzlichen Bauteile zum Verschließen etwaig ungenutzter Durchgangsöffnungen erforderlich.

Somit kann insgesamt die Gleichteilezahl erhöht werden, da dasselbe Bauteil für unterschiedliche Spezifikationen bereitgestellt werden kann, welche bspw. alle die gleichen geschwächten Materialabschnitte aufweisen, auch wenn aufgrund der Spezifikation unterschiedlicher Bauteiltypen nicht immer dieselben Durchgangsöffnungen erforderlich sind. Die Durchgangsöffnungen können ab Herstellungswerk, am Einbauort oder auch zu einem beliebigen anderen Zeitpunkt wahlweise an beliebigen Positionen des Bauteils dort eingebracht werden, wo ein geschwächter Materialabschnitt vorgesehen ist. Somit ist einerseits die Flexibilität eines somit erzeugten Bauteils deutlich erhöht, während zudem die Gleichteilezahl erhöht und die Notwendigkeit zusätzlicher Elemente, wie Dichtelemente, reduziert werden kann. Ebenso kann die Produktionszeit verkürzt werden, da Durchgangsöffnungen aufgrund der geschwächten Materialabschnitte in einfacher Weise bereitgestellt werden können, während gleichzeitig ein Aufwand zur Abdichtung offener und ungenutzter Durchgangsöffnungen entfallen kann.

Das Verfahren kann des Weiteren den Schritt des Entfernens des geschwächten Materialabschnittes zur Erzeugung einer Durchgangsöffnung im Bauteil aufweisen. Dies bevorzugt mittels eines einzuführenden Teils. Das einzuführende Teil kann wahlweise ein Werkzeug sein, wie ein Bohrer, ein Schraubendreher und dergleichen. Alternativ oder zusätzlich ist es auch denkbar, dass das einzuführende Teil ein Haltemittel ist, um bspw. Komponenten an dem Bauteil zu befestigen. Denkbar sind hier alle möglichen Haltemittel, wie Nieten, Bolzen oder insbesondere auch Schrauben bzw. selbstschneidende Schrauben. Beim Einschrauben einer solchen Schraube kann bevorzugt ein Gewinde der Schraube mit der Durchgangsöffnung, vorzugsweise mit durch die Rücksprünge des Stempels erzeugten Vorsprungabschnitten und/oder mit durch die Vorsprünge des Stempels erzeugten Rücksprungabschnitten, eine formschlüssige und/oder kraftschlüssige Verbindung eingehen.

Alternativ oder zusätzlich ist es auch denkbar, dass eben dieses Gewinde der Schraube insbesondere bei selbstschneidenden Schrauben ein Gewinde in die Durchgangsöffnung bzw. die die Durchgangsöffnung begrenzende Seitenwand des Bauteils schneidet. Bei der Verwendung eines Bohrers können beispielsweise zylindrische Durchgangsöffnungen in einfacher Weise in dem geschwächten Materialabschnitt schnell und sicher bereitgestellt werden, um beispielsweise eine Durchführöffnung für ein durchzuführendes Kabel bereitzustellen. Insbesondere bei der Verwendung von Haltemitteln, wie Schrauben, kann die aufgrund der mit den Vorsprüngen und Rücksprüngen des Stempels korrespondierende Form des geschwächten Materialabschnittes zur entsprechenden Verbindung mit der Schraube dienen, so dass beispielsweise durch einfaches Ansetzten und Eindrehen einer Schraube einerseits der entsprechende geschwächte Materialabschnitt entfernt wird und gleichzeitig eine sichere Aufnahme für eine Schraube bereitgestellt ist.

In einer bevorzugten Ausführungsform können durch den geschwächten Materialabschnitt, vorzugsweise durch die Rücksprünge des Stempels erzeugte Vorsprungabschnitte und/oder durch die Vorsprünge des Stempels erzeugte Rücksprungabschnitte, in dem Bauteil im Bereich des geschwächten Materialabschnitts sowie auch nach dessen Entfernung eine Zentrierung für das einzuführende Teil bereitgestellt werden. So kann beispielsweise eine Zentrierung für einen Bohrer bereitgestellt werden, um somit die Position der zu bohrenden Durchgangsöffnung automatisch vorzugeben und den Bohrerkopf sicher zu führen. Zudem kann es ermöglicht werden, eine einzudrehende Schraube zu zentrieren und somit das Eindrehen der Schraube bei gleichzeitigem Entfernen des geschwächten Materialabschnittes zu erleichtern. Ebenso können so Bedienfehler durch falsche Positionierung von Durchgangsöffnungen vermieden werden.

Das Bauteil, vorzugsweise wenigstens dessen dünnwandiger Abschnitt, kann aus Metall, Kunststoff oder einem beliebigen anderen Material, welches sich entsprechend umformen bzw. prägen lässt, hergestellt sein oder werden. Ist das Bauteil bzw. dessen dünnwandiger Abschnitt aus Metall hergestellt, so kann es vorzugsweise ein Blech aufweisen oder aus einem Blech hergestellt sein bzw. werden. Das Blech kann bevorzugt ein Feinblech oder ein Grobblech sein. Somit wird ein bspw. für Leuchtengehäuse gängiges und einfach zu bearbeitendes Material bereitgestellt. Ist das Bauteil bzw. dessen dünnwandiger Abschnitt aus Kunststoff hergestellt so kann es beispielsweise in einem Spritzgussverfahren hergestellt sein. Das Kunststoff-Bauteil kann eine (wenigstens teilweise dünnwandige) Platte oder ein Bauteilkörper sein, welche entsprechend den dünnwandigen Abschnitt aufweisen. Als bevorzugtes Kunststoffmaterial sind bspw. Polycarbonat (PC) und ähnliche Kunststoffe zu nennen, welche sich entsprechend umformen bzw. prägen lassen.

Das Verfahren kann des Weiteren den Schritt zur Umformung des Bauteils, vorzugsweise des Blechs oder der Kunststoff-Platte, zur Erzeugung eines Bauteilkörpers, wie beispielsweise eines Leuchtengehäuses, mittels eines Biegeprozesses oder eines Stanz-Biege-Prozesses aufweisen. Insofern kann ein Bauteil (bspw. Blech oder Platte) wahlweise vor und/oder nach Erzeugen des geschwächten Materialabschnittes entsprechend umgeformt werden, um einen beliebigen Bauteilkörper bereitzustellen, welcher dann eben diesen geschwächten Materialabschnitt aufweist.

Der Stempel kann einen zyklisch symmetrischen, spiegelsymmetrischen, sternförmigen, wellenförmigen, zahnradförmigen oder kreuzförmigen Querschnitt aufweisen. Selbstverständlich sind auch beliebige andere Formen mit über den Umfang abwechselnden Vorsprüngen und Rücksprüngen denkbare. Die hier Vorgestellten sollen bevorzugte Ausführungsbeispiele darstellen, welche zum einen eine einfache Erzeugung des Stempels und zum anderen eine wirkungsvolle Prägung des Blechs mit der gewünschten Querschnittsform zur Erzeugung des geschwächten Materialabschnitts ermöglichen.

Die Spitzen der Vorsprünge im Querschnitt des Stempels gesehen liegen bevorzugt alle auf derselben Ringlinie, wie einer Kreislinie, einer Ellipsenlinie oder einer Ovallinie. Alternativ oder ergänzend ist es denkbar, dass auch die Täler der Rücksprünge im Querschnitt des Stempels gesehen alle auf derselben Ringlinie, wie einer Kreislinie, einer Ellipsenlinie oder einer Ovallinie liegen. Die sowohl die Spitzen als auch die Täler aufweisenden Ringlinien sind bevorzugt koaxial ausgerichtet. Auf diese Weise wird bevorzugt eine symmetrische Form des geschwächten Materialabschnittes erzeugt. Insbesondere können so in einfacher Weise Aufnahmen für Schrauben bzw. Bohrer bereitgestellt werden, welche dann bevorzugt eine sichere Führung ermöglichen. Auch die Erzeugung entsprechender Stempel ist bezüglich derartiger Formen besonders einfach umsetzbar.

Bevorzugt kann eine Matrize zur Aufnahme des Stempels und des umzuformenden Prägungsabschnittes beim Tiefziehprozess bereitgestellt sein, welche bevorzugt eine dem Stempel korrespondierende oder eine entsprechende umlaufende Querschnittsform, wie eine ringförmige (bspw. runde) Querschnittsform, aufweist.

Der Stempel kann einen Durchmesser D, vorzugsweise einen mittleren Durchmesser, von 0,5 mm bis 50 mm aufweisen. Der Stempel kann im Bereich der Vorsprünge einen Radius R von 0,3 mm bis 30 mm aufweisen. Die Erfindung ist hierauf selbstverständlich nicht beschränkt, sondern diese und weitere Werte bzw. Wertebereiche sollen lediglich bevorzugte Werte(-bereiche) abbilden.

Der geschwächte Materialabschnitt kann bevorzugt an seiner schmalsten Stelle einen Durchmesser d, vorzugsweise einen mittleren Durchmesse von 0,3 mm bis 50 mm aufweisen. Auf diese Weise können gängige Schraubentypen beispielsweise mit metrischem Gewinde (bspw. M1, M2, M3, ...) verwendet werden.

Das Bauteil, vorzugsweise wenigstens der dünnwandige Abschnitt, hat bevorzugt eine Materialstärke von 0,1 mm bis 5 mm, vorzugsweise 0,2 mm bis 3 mm und besonders bevorzugt 0,3 mm bis 2 mm und am meisten bevorzugt von 0,5 mm bis 1mm. Somit können für entsprechende Bauteile, wie beispielsweise Leuchtenkörper, gängige Blechmaterialien bereitgestellt werden, welche sich zudem für die gegebenen Zwecke in besonders einfacher Weise verarbeiten lassen, während sie gleichzeitig eine ausreichende Stabilität für das Bauteil bieten. Selbstverständlich ist diese Erfindung auf die vorbezeichneten Materialstärken nicht beschränkt.

Gemäß einem weiteren Aspekt betrifft die vorliegende Erfindung ferner ein Bauteil (bspw. aus einem Blech oder Kunststoff), hergestellt nach einem Verfahren gemäß einem der vorhergehenden Ansprüche, mit wenigstens einem entsprechenden geschwächten Materialabschnitt. Das Bauteil kann bevorzugt einen Bauteilkörper, wie ein Leuchtengehäuse, hergestellt aus dem Blech mittels eines Biegeprozesses oder Stanz-Biege-Prozesses, sein bzw. aufweisen. Auch kann das Bauteil mit Bauteilkörper bzw. der Bauteilkörper aus Kunststoff bevorzugt mittels eines Spritzgussverfahrens hergestellt sein. Auf diese Weise kann ein entsprechendes Bauteil in jeglicher geometrischer Form bereitgestellt werden, welches den oder die bevorzugten geschwächten Materialabschnitte aufweist. Da die geschwächten Materialabschnitte (zunächst) geschlossen sind, kann auch eine höher Schutzklasse (>IP50) erzielt werden. Insgesamt kann die vorliegende Erfindung jedes Bauteil umfassen, welches einen dünnwandigen Abschnitt aufweist bzw. dünnwandig ausgebildet ist. Beispielhaft seien hier Leuchtengehäuse, Leuchtenkomponentengehäuse, Leuchtenkomponenten (bspw. Optikplatten bzw. Optikfolien, wie bspw. Optikplatten, Diffusorfolien, Mikrooptikplatten, und dergleichen).

Gemäß einem weiteren Aspekt betrifft die vorliegende Erfindung ferner ein Bauteilsystem, wie eine Leuchte, aufweisend ein erfindungsgemäßes Bauteil, wobei der geschwächte Materialabschnitt wahlweise entfernt und in der so erzeugten Durchgangsöffnung ein Teil eingeführt, wie beispielsweise eine Schraube, oder durchgeführt, wie beispielsweise ein Kabel, ist. Im Falle des Bauteilsystems als Leuchte könnten beispielsweise mittels der eingeführten Teile, wie einer Schraube, beispielsweise Leuchtenkomponenten an dem Blech bzw. Bauteilkörper befestigt sein/werden. Leuchtenkomponenten sind bspw. Betriebsgeräte einer LED-Leuchte oder auch Leuchtmittel, wie beispielsweise LED-Module, und dergleichen. Da ausschließlich dort Durchgangsöffnungen vorgesehen werden, wo diese benötigt werden, sind diese in der Regel durch Teile (bspw. Schrauben) verschlossen, so dass ohne Weiteres - insbesondere ohne Verwendung weiterer (Dicht-)Elemente - auch eine höher Schutzklasse (>IP50) erzielt werden kann.

Weitere Ausführungsbeispiele und Vorteile der vorliegenden Erfindung werden anhand der Figuren der begleitenden Zeichnungen beschrieben. Es zeigen:
- Figur 1a: eine perspektivische Draufsicht auf ein Bauteil (hier ein Blech bzw. eine Kunststoffplatte) nach dem Tiefziehschritt gemäß dem erfindungsgemäßen Verfahren,
- Figur 1b: eine perspektivische Unteransicht des Bauteils gemäß Figur 1a,
- Figur 2a: eine perspektivische Draufsicht auf ein Bauteil nach dem Umformschritt gemäß dem erfindungsgemäßen Verfahren zur Erzeugung des geschwächten Materialabschnitts,
- Figur 2b: eine perspektivische Unteransicht des Bauteils gemäß Figur 2a,
- Figur 3a: eine perspektivische Draufsicht auf ein erfindungsgemäßes Bauteil hergestellt nach dem erfindungsgemäßen Verfahren nach dem Einführen eines einzuführenden Teils (hier eine Schraube) und somit Entfernen des geschwächten Materialabschnittes,
- Figur 3b: eine perspektivische Unteransicht des Bauteils mit eingeführter Schraube gemäß Figur 3a, und
- Figur 4: eine schematische perspektivische Ansicht eines Ausführungsbeispiels eines Stempels für ein erfindungsgemäßes Verfahren.

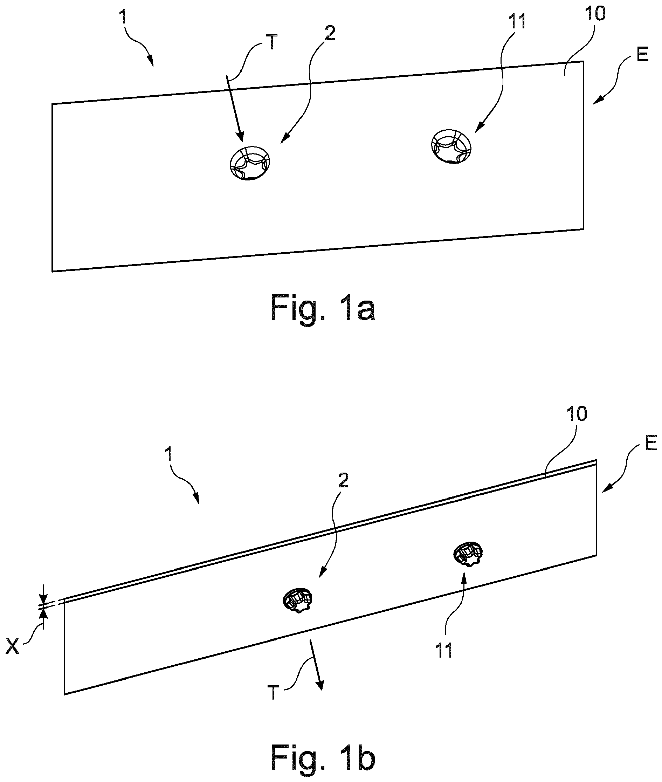

Die Figuren 1-3 zeigen unterschiedliche Schritte gemäß dem erfindungsgemäßen Verfahren zur Erzeugung eines geschwächten Materialabschnitts 12 in einem Bauteil 1; genauer in einem dünnwandigen Abschnitt 2 des Bauteils 1. Dabei kann der dünnwandige Abschnitt 2 nur in einem oder mehreren Teilen bzw. Teilbereichen des Bauteils 1 vorliegen (also bspw. verdünnte Wandabschnitte aufweisen). Es ist aber auch denkbar, dass der dünnwandige Abschnitt 2 sich über das gesamte Bauteil 1 erstreckt; mithin also ein entsprechend dünnwandiges Bauteil 1 vorliegt.

Gemäß einem ersten Schritt wird zunächst ein Bauteil 1 mit wenigstens einem dünnwandigen Abschnitt 2 bereitgestellt. Das Bauteil 1, wenigstens dessen dünnwandiger Abschnitt 2, kann aus Metall hergestellt sein bzw. werden. So kann es bevorzugt ein Blech aufweisen oder aus einem Blech hergestellt sein bzw. werden. Bei diesem Blech kann es sich um gängige Stahlbleche beispielsweise aus Standardstahl handeln. Beispielsweise kann es sich bei dem Blech 10 um ein Feinblech oder ein Grobblech handeln. Es ist auch denkbar, dass das Bauteil 1, wenigstens dessen dünnwandiger Abschnitt 2, bevorzugt aus Kunststoff hergestellt ist oder wird. Als bevorzugtes Kunststoffmaterial ist hier beispielsweise Polycarbonat (PC) zu nennen. Das Bauteil 1 bzw. wenigstens dessen dünnwandiger Abschnitt 2 kann in einem Kunststoff-Spritzgussverfahren hergestellt sein/werden. Ungeachtet des Materials, aus dem das Bauteil 1 bzw. dessen dünnwandiger Abschnitt 2 hergestellt ist, kann das Bauteil 1 bzw. dessen dünnwandiger Abschnitt 2 ein Blech (aus Metall oder Kunstsoff oder einem anderen Material), eine Platte oder ein (zwei- bzw. dreidimensionaler) Bauteilkörper sein. Das Bauteil 1, vorzugsweise wenigstens der dünnwandige Abschnitt 2, kann bevorzugt eine Materialstärke von 0,1 mm bis 5 mm aufweisen, vorzugsweise 0,2 mm bis 3 mm, besonders bevorzugt 0,3 mm bis 2 mm, und am meisten bevorzugt von 0,5 mm bis 1 mm. Die Erfindung ist hierauf jedoch nicht beschränkt, sofern der dünnwandige Abschnitt 2 im Zusammenspiel mit einem entsprechenden Stempel 20 die Durchführung eines erfindungsgemäßen Verfahrens zur Erzeugung eines geschwächten Materialabschnittes 12 erlaubt.

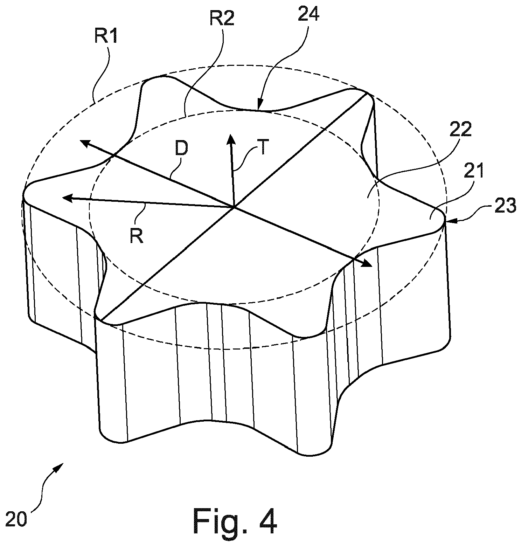

In einem weiteren Schritt wird ein Prägungsabschnitt 11 des dünnwandigen Abschnitts 2 aus einer Bauteilebene E des dünnwandigen Abschnitts 2 mit einem Stempel 20 in eine Tiefziehrichtung T bevorzugt senkrecht zur Bauteilebene E des dünnwandigen Abschnitts 2 tiefgezogen. Der dafür verwendete Stempel 20 weist in Tiefziehrichtung T gesehen einen Querschnitt mit über den Umfang verteilt abwechselnden Vorsprüngen 21 und Rücksprüngen 22 auf. Gemäß dem Ausführungsbeispiel der Figur 4 kann der Stempel 20 einen sternförmigen Querschnitt aufweisen. Grundsätzlich ist die Erfindung hierauf jedoch nicht beschränkt. Vielmehr kann der Stempel 20 insgesamt bevorzugt einen zyklisch symmetrisch, spiegelsymmetrischen, wellenförmigen, zahnradförmigen, kreuzförmigen, den vorbeschriebenen sternförmigen oder auch jeglichen anderen Querschnitt mit den entsprechenden Vorsprüngen 21 und Rücksprüngen 22 aufweisen.

In einer bevorzugten Ausgestaltungsform liegen die Spitzen 23 der Vorsprünge 21 im Querschnitt des Stempels 20 gesehen alle auf derselben Ringlinie R1, wie hier beispielsweise einer Kreislinie oder auch einer Ellipsenlinie oder einer Ovallinie oder dergleichen. Alternativ oder zusätzlich ist es auch denkbar, dass ebenso die Täler 24 der Rücksprünge 22 im Querschnitt des Stempels 20 gesehen alle auf derselben Ringlinie R2, wie hier beispielsweise einer Kreislinie oder auch einer Ellipsenlinie oder einer Ovallinie oder dergleichen liegen. Die beiden Ringlinien R1, R2 sind bevorzugt koaxial zueinander angeordnet bzw. ausgerichtet. Auf diese Weise ergibt sich eine insgesamt bevorzugt möglichste symmetrisch Form des Stempels 20 und somit auch der damit zu erzeugenden Prägung, welche mittels des Tiefziehschrittes in den Prägungsabschnitt 11 des Bauteils 1 eingebracht wird. Dies hat zum einen den Vorteil, eine möglichst einfache Geometrie des Stempels 20 bereitzustellen. Zum anderen kann, wie im Weiteren noch beschrieben wird, zudem eine Zentrierung aufgrund einer bevorzugt symmetrischen Form einfach bereitgestellt werden.

Der Stempel 20 kann einen Durchmesser D, vorzugsweise einen mittleren Durchmesser, von 0,5 mm bis 50 mm aufweisen. Der Stempel 20 kann ebenso im Bereich der Vorsprünge 21 einen Radius R von 0,3 mm bis 30 mm aufweisen. Die Erfindung ist auf die vorbeschriebenen Maßangaben jedoch nicht beschränkt.

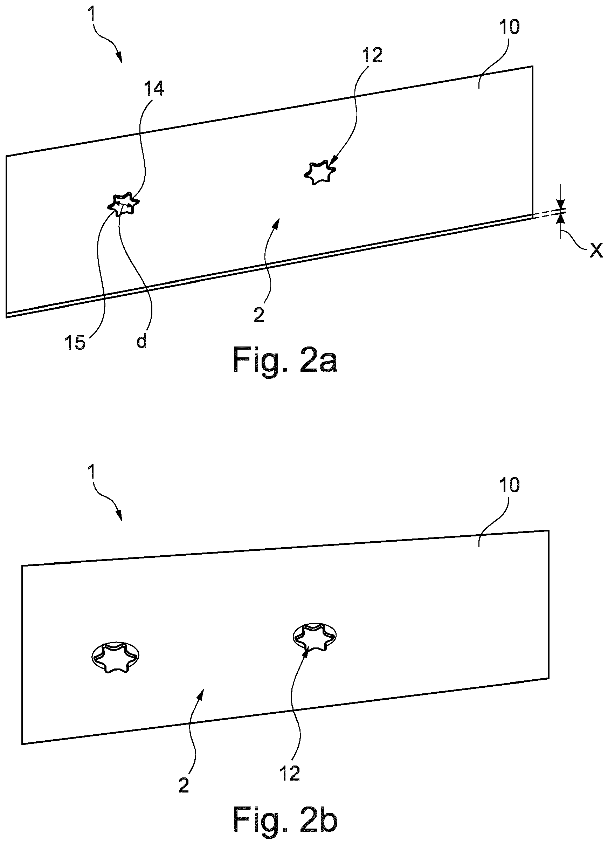

In einem weiteren Verfahrensschritt wird sodann das Bauteil 1 derart umgeformt, dass der in dem vorhergehenden Schritt tiefgezogene Prägungsabschnitt 11 wieder in die Bauteilebene E des dünnwandigen Abschnitts 2 zurückbewegt (also (plastisch) umgeformt) wird, sodass ein geschwächter Materialabschnitt 12 mit im Wesentlichen der Querschnittsform des Stempels 20 im Bauteil 1 erzeugt wird, wie dies beispielsweise den Figuren 2a und 2b zu entnehmen ist. Wie den genannten Figuren zu entnehmen ist, wird die Querschnittsform insofern beibehalten, wie es die plastische Verformung des Bauteilmaterials bei der vorbeschriebenen Umformung des Blechs 10 zulässt. In jedem Fall lässt sich die grundsätzliche Querschnittsform des Stempels 20 auch in dem geschwächten Materialabschnitt 12 wiedererkennen, wie dies insbesondere der Figur 2a deutlich zu entnehmen ist. Dort ist der geschwächte Materialbereich 12 hier als bezüglich der Materialstärke bzw. Dicke des Bauteils 1 bzw. dessen dünnwandigen Abschnitts 2 verdünnter Materialbereich dargestellt. Dies ergibt sich denklogisch aus dem Tiefziehschritt und der somit gegebenen Verteilung des Materials im Bereich des Prägungsabschnittes 11.

Der geschwächte Materialabschnitt 12 kann bevorzugt an seiner schmalsten Stelle einen Durchmesser d, vorzugsweise einen mittleren Durchmesser, von 0,3 mm bis 50 mm aufweisen, wobei die Erfindung hierauf nicht beschränkt ist. Der Durchmesser d ergibt sich hier in der Regel auf Basis des Stempeldurchmessers D unter Einbeziehung der plastischen Verformung des Bauteilmaterials bei dem vorbeschriebenen Umformschritt.

Mittels dieses Verfahrens werden somit geschwächte Materialabschnitte 12 in einem dünnwandigen Abschnitt 2 eines Bauteils 1 bereitgestellt, welche dann wahlweise aufgrund von Bauteilspezifikationen als Durchgangsöffnung 13 in einfacher Weise bereitgestellt werden können. Gemäß einem entsprechenden weiteren Schritt ist es daher möglich, den geschwächten Materialabschnitt 12 zur Erzeugung eben dieser Durchgangsöffnung 13 im Bauteil 1 mittels eines einzuführenden Teils S zu entfernen.

Das einzuführende Teil S kann dabei beispielsweise ein Werkzeug, wie ein Bohrer oder ein Schraubendreher und dergleichen sein, mittels dem der geschwächte Materialabschnitt 12 genutzt wird, um durch dessen einfache Entfernung dort eine Durchgangsöffnung 13 einzubringen. Mittels eines mechanischen Werkzeugs, wie beispielsweise eines Schraubendrehers, kann es damit ermöglicht werden, den als eine Art Prägung in dem Bauteil bereitgestellten, geschwächten Materialabschnitt 12 in einfacher Weise aus dem Bauteil 1 zu entfernnen (bspw. herauszudrücken bzw. auszustanzen). Auch die Verwendung eines Bohrers kann aufgrund des geschwächten Materialabschnittes 12 vereinfacht werden, da für einen Bohrschritt zum Einbringen einer zylindrischen Durchgangsöffnung 13 nur eine geringe Materialstärke zu durchbohren ist. Das einfache Entfernen des geschwächten Materialabschnitts 12 zur Bereitstellung einer Durchgangsöffnung 13 kann dazu dienen, Elemente, wie beispielsweise Kabel, durch die Durchgangsöffnung 13 hindurchzuführen.

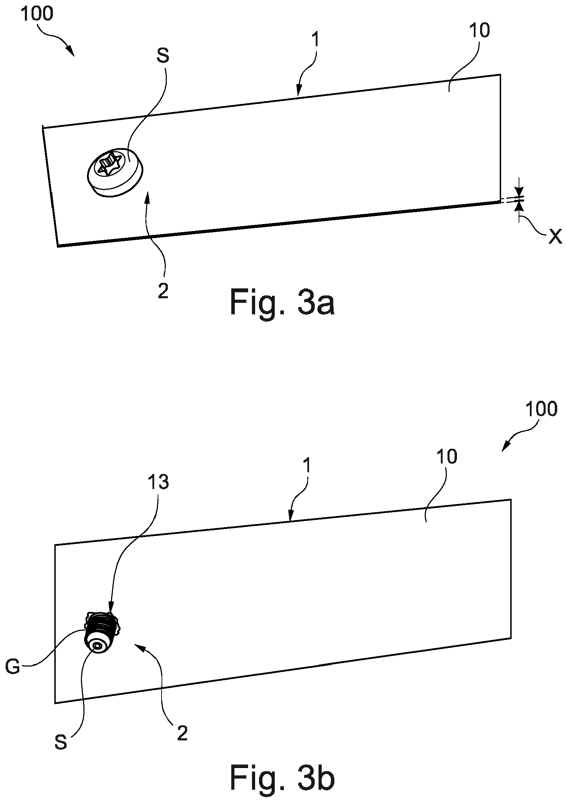

Alternativ oder zusätzlich ist es auch denkbar, als einzuführendes Teil S ein Haltemittel S, wie eine hier dargestellte Schraube bzw. eine selbstschneidende Schraube, vorzusehen. Beim Einschrauben einer Schraube S und somit bevorzugt automatischen Entfernen des geschwächten Materialabschnitts 12 zur Bildung der Durchgangsöffnung 13 soll es vorzugsweise ermöglicht werden, dass ein Gewinde der Schraube S mit der so entstandenen Durchgangsöffnung 13 eine formschlüssige und/oder kraftschlüssige Verbindung eingeht; dies vorzugsweise mit durch die Rücksprünge 22 des Stempels 20 erzeugten Vorsprungabschnitten 14 und/oder mit durch die Vorsprünge 21 des Stempels 20 erzeugten Rücksprungabschnitten 15. Dies ist deutlich der Figur 3b zu entnehmen, wonach die Schraube S in die Durchgangsöffnung 13 eingeschraubt und über die Struktur bzw. Kontur der durch den geschwächten Materialabschnitt 12 gegebenen Durchgangsöffnung 13 in Wirkverbindung steht.

Auch ist es zusätzlich oder alternativ denkbar, dass mittels einer einzuführenden (selbstschneidenden) Schraube S ein Gewinde in die Durchgangsöffnung 13 geschnitten wird.

Durch den geschwächten Materialabschnitt 12, vorzugsweise durch die Vorsprungabschnitte 14 und/oder durch die Rücksprungabschnitte 15, kann eine Zentrierung für das einzuführende Teil S bereitgestellt werden, wie dies beispielsweise in der Figur 3a und 3b zu erkennen ist. Hier bietet der geschwächte Materialabschnitt 12 aufgrund seiner bezüglich der umgebenden Bereiche des Bauteils 1 vergleichsweise dünnen Materialstärke sowie der Querschnittsform des geschwächten Materialabschnitts 12 eine gute und sichere Zentrierung für die einzuführenden Teile S, um somit ein definiertes und sicheres Einführen bspw. einer Schraube oder eines Bohrers unter Vermeidung von Fehlern aufgrund falscher Positionierung im Bauteil 1 zu ermöglichen.

Das Verfahren kann des Weiteren einen zusätzlichen Umformschritt zur Umformung des Bauteils 1, wie vorzugsweise des Blechs oder der Kunststoff-Platte 10, zur Erzeugung eines Bauteilkörpers, wie eines Leuchtengehäuses, mittels eines Biegeprozesses oder eines Stanz-Biege-Prozesse aufweisen.

Wie insbesondere der Figur 2 zu entnehmen ist, betrifft die vorliegende Erfindung ferner ein Bauteil 1 (bspw. aus einem Blech 10 oder Kunststoff) hergestellt nach einem Verfahren gemäß der vorliegenden Erfindung mit wenigstens einem geschwächten Materialabschnitt 12. In Figur 2 sind hier beispielsweise zwei entsprechende geschwächte Materialabschnitte 12 gezeigt.

Des Weiteren kann das Bauteil 1 einen Bauteilkörper aufweisen, wie beispielsweise ein Leuchtengehäuse, welcher aus dem Blech 10 mittels eines Biegeprozesses oder eines Stanz-Biege-Prozesses entweder vor oder nach dem Einbringen des geschwächten Materialabschnittes 12 hergestellt ist/wird, oder aus Kunststoff bevorzugt mittels eines Spritzgussverfahrens (also vor dem Schritt des Bereitstellens desselben) hergestellt ist/wird. Ebenso betrifft die vorliegende Erfindung selbstverständlich auch den Einsatz eines solchen Bauteils unter Verwendung eben der vorbeschriebenen geschwächten Materialabschnitte 12 zum Einsatz als ein Bauteilsystems 100, wie dies beispielsweis in Figur 3 dargestellt ist. Dabei kann es sich beispielsweise um eine Leuchte bzw. Komponenten einer Leuchte handeln. Das Bauteilsystem 100 weist dabei wenigstens ein Bauteil 1 gemäß der vorliegenden Erfindung auf, wobei wenigstens einer der geschwächten Materialabschnitte 12 wahlweise entfernt und in der so erzeugten Durchgangsöffnung 13 bevorzugt ein Teil S eingeführt, wie hier beispielsweise eine Schraube, oder durchgeführt, wie beispielsweise ein Kabel, ist.

Die vorliegende Erfindung ist auf das vorbeschriebene Ausführungsbeispiel nicht beschränkt, sofern sie vom Gegenstand der folgenden Ansprüche umfasst ist.

## Patentansprüche

1. Verfahren zur Erzeugung eines geschwächten Materialabschnitts (12) in einem Bauteil (1), aufweisend die folgenden Schritte:
• Bereitstellen eines Bauteils (1) mit wenigstens einem dünnwandigen Abschnitt (2),
• Tiefziehen eines Prägungsabschnittes (11) des dünnwandigen Abschnitts (2) aus einer Bauteilebene (E) des dünnwandigen Abschnitts (2) mit einem Stempel (20) in eine Tiefziehrichtung (T) senkrecht zur Bauteilebene (E) des dünnwandigen Abschnitts (2),
• Umformen des Bauteils (1) derart, dass der tiefgezogene Prägungsabschnitt (11) wieder in die Bauteilebene (E) des dünnwandigen Abschnitts (2) zurückbewegt wird,
**dadurch gekennzeichnet,**
**dass** das Umformen des Bauteils derart erfolgt, dass ein geschwächter Materialabschnitt (12) mit im Wesentlichen der Querschnittsform des Stempels (20) im Bauteil (1) erzeugt wird, und
**dass** der Stempel (20) in Tiefziehrichtung (T) gesehen einen Querschnitt mit über den Umfang verteilt abwechselnden Vorsprüngen (21) und Rücksprüngen (22) aufweist.

2. Verfahren nach Anspruch 1, ferner aufweisend den Schritt des Entfernens des geschwächten Materialabschnittes (12) zur Erzeugung einer Durchgangsöffnung (13) im Bauteil (1) mittels eines einzuführenden Teils (S), wobei das einzuführende Teil (S) bevorzugt wahlweise:
• ein Werkzeug, wie ein Bohrer, ist, oder
• ein Haltemittel, wie eine Schraube (S) und insbesondere eine selbstschneidende Schraube, ist, wobei beim Einschrauben einer Schraube (S) vorzugsweise ein Gewinde (G) der Schraube (S) mit der Durchgangsöffnung (13), vorzugsweise mit durch die Rücksprünge (22) des Stempels (20) erzeugten Vorsprungabschnitten (14) und/oder mit durch die Vorsprünge (21) des Stempels (20) erzeugten Rücksprungabschnitten (15), eine formschlüssige und/oder kraftschlüssige Verbindung eingeht und/oder ein Gewinde in die Durchgangsöffnung (13) schneidet.

3. Verfahren nach Anspruch 2, wobei durch die Vorsprungabschnitte (14) und/oder durch die Rücksprungabschnitte (15) eine Zentrierung für das einzuführende Teil bereitgestellt wird.

4. Verfahren nach einem der vorhergehenden Ansprüche, wobei das Bauteil (1), wenigstens dessen dünnwandiger Abschnitt (2), aus Metall hergestellt ist oder wird, vorzugsweise ein Blech (10) aufweist oder aus einem Blech (10) hergestellt ist oder wird, wobei das Blech (10) bevorzugt ein Feinblech oder ein Grobblech ist.

5. Verfahren nach einem der vorhergehenden Ansprüche, wobei das Bauteil (1), wenigstens dessen dünnwandiger Abschnitt (2), aus Kunststoff hergestellt ist oder wird, vorzugsweise aus Polycarbonat und/oder in einem Spritzgussverfahren und/oder eine Platte (10) oder ein Bauteilkörper ist.

6. Verfahren nach einem der vorhergehenden Ansprüche, ferner aufweisend den Schritt:
• Umformung des Bauteils (1), vorzugsweise des Blechs (10) oder der Kunststoff-Platte (10), zur Erzeugung eines Bauteilkörpers, wie eines Leuchtengehäuses, mittels eines Biegeprozesses oder eines Stanz-Biege-Prozesses.

7. Verfahren nach einem der vorhergehenden Ansprüche, wobei der Stempel (20) einen zyklisch symmetrischen, spiegelsymmetrischen, sternförmigen, wellenförmigen, zahnradförmigen oder kreuzförmigen Querschnitt aufweist.

8. Verfahren nach einem der vorhergehenden Ansprüche, wobei Spitzen (23) der Vorsprünge (21) im Querschnitt des Stempels (20) gesehen alle auf derselben Ringlinie (R1), wie einer Kreislinie, einer Ellipsenlinie oder einer Ovallinie, liegen, und/oder
wobei Täler (24) der Rücksprünge (22) im Querschnitt des Stempels (20) gesehen alle auf derselben Ringlinie (R2), wie einer Kreislinie, einer Ellipsenlinie oder einer Ovallinie, liegen.

9. Verfahren nach einem der vorhergehenden Ansprüche, wobei der Stempel (20) einen mittleren Durchmesser von 0,5mm bis 50mm aufweist, und/oder wobei der Stempel (20) im Bereich der Vorsprünge (21) einen Radius R von 0,3mm bis 30mm aufweist.

10. Verfahren nach einem der vorhergehenden Ansprüche, wobei der geschwächte Materialabschnitt (12) bevorzugt an seiner schmalsten Stelle einen Durchmesser d, vorzugsweise einen mittleren Durchmesser, von 0,3mm bis 50mm aufweist.

11. Verfahren nach einem der vorhergehenden Ansprüche, wobei das Bauteil (1), vorzugsweise wenigstens dessen dünnwandiger Abschnitt (2), eine Materialstärke x von 0,1mm bis 5mm aufweist, vorzugsweise 0,2mm bis 3mm, besonders bevorzugt 0,3mm bis 2mm, und am meisten bevorzugt von 0,5mm bis 1mm.

12. Bauteil (1) hergestellt nach einem Verfahren gemäß Anspruch 7 mit wenigstens einem entsprechenden geschwächten Materialabschnitt (12).

13. Bauteil (1) nach Anspruch 12 mit einem Bauteilkörper, wie einem Leuchtengehäuse, hergestellt aus dem Blech (10) mittels eines Biegeprozesses oder eines Stanz-Biege-Prozesses, oder hergestellt aus Kunststoff bevorzugt mittels eines Spritzgussverfahrens.

14. Bauteilsystem (100), wie eine Leuchte, aufweisend ein Bauteil (1) nach Anspruch 12 oder 13, wobei der geschwächte Materialabschnitt (12) wahlweise entfernt und bevorzugt in der so erzeugten Durchgangsöffnung (13) ein Teil (S) eingeführt, wie beispielsweise eine Schraube, oder durchgeführt, wie beispielsweise ein Kabel, ist.

## Claims

1. Method for producing a weakened material portion (12) in a component (1), comprising the following steps:
• providing a component (1) having at least one thin-walled portion (2),
• deep drawing an embossed portion (11) of the thin-walled portion (2) from a component plane (E) of the thin-walled portion (2) by means of a punch (20) in a deep drawing direction (T) perpendicular to the component plane (E) of the thin-walled portion (2),
• reshaping the component (1) in such a way that the deep-drawn embossed portion (11) is moved back into the component plane (E) of the thin-walled portion (2),
**characterized in that**
the reshaping of the component is carried out in such a way that a weakened material portion (12) having substantially the cross-sectional shape of the punch (20) is produced in the component (1),
**and in that** the punch (20) has a cross-section with alternating projections (21) and recesses (22) distributed over the periphery when viewed in the deep drawing direction (T).

2. Method according to claim 1, further comprising the step of removing the weakened material portion (12) to produce a through-opening (13) in the component (1) by means of a part (S) to be inserted, wherein the part (S) to be inserted is preferably either:
• a tool, such as a drill, or
• a retaining means, such as a screw (S) and in particular a self-tapping screw, wherein, when a screw (S) is screwed in, a thread (G) of the screw (S) preferably forms a positive and/or non-positive connection with the through-opening (13), preferably with projection portions (14) produced by the recesses (22) of the punch (20) and/or with recess portions (15) produced by the projections (21) of the punch (20), and/or a thread is preferably tapped into the through-opening (13).

3. Method according to claim 2, wherein the part to be inserted is centered by the projection portions (14) and/or by the recess portions (15).

4. Method according to any of the preceding claims, wherein the component (1), at least the thin-walled portion (2) thereof, is manufactured from metal, preferably comprises a metal sheet (10), or is manufactured from a metal sheet (10), wherein the metal sheet (10) is preferably a light gauge metal sheet or a thick gauge metal sheet.

5. Method according to any of the preceding claims, wherein the component (1), at least the thin-walled portion (2) thereof, is manufactured from plastics material, preferably from polycarbonate and/or in an injection molding process, and/or is a plate (10) or a component body.

6. Method according to any of the preceding claims, further comprising the step of:
• reshaping the component (1), preferably the metal sheet (10) or the plastics plate (10), to produce a component body, such as a luminaire housing, by means of a bending process or a punching and bending process.

7. Method according to any of the preceding claims, wherein the punch (20) has a cyclically symmetrical, mirror-symmetrical, star-shaped, wave-shaped, gear-shaped or cross-shaped cross-section.

8. Method according to any of the preceding claims, wherein tips (23) of the projections (21) all lie on the same annular line (R1), such as a circular line, an elliptical line or an oval line, when viewed in the cross-section of the punch (20), and/or
wherein valleys (24) of the recesses (22) all lie on the same annular line (R2), such as a circular line, an elliptical line or an oval line, when viewed in the cross-section of the punch (20).

9. Method according to any of the preceding claims, wherein the punch (20) has an average diameter of 0.5 mm to 50 mm, and/or wherein the punch (20) has a radius R of 0.3 mm to 30 mm in the region of the projections (21).

10. Method according to any of the preceding claims, wherein the weakened material portion (12) preferably has a diameter d, preferably an average diameter, of 0.3 mm to 50 mm at its narrowest point.

11. Method according to any of the preceding claims, wherein the component (1), preferably at least the thin-walled portion (2) thereof, has a material thickness x of 0.1 mm to 5 mm, preferably 0.2 mm to 3 mm, particularly preferably 0.3 mm to 2 mm, and most preferably 0.5 mm to 1 mm.

12. Component (1) manufactured using a method according to claim 7, having at least one corresponding weakened material portion (12).

13. Component (1) according to claim 12 having a component body, such as a luminaire housing, manufactured from the metal sheet (10) by means of a bending process or a punching and bending process, or manufactured from plastics material, preferably by means of an injection molding process.

14. Component system (100), such as a luminaire, comprising a component (1) according to claim 12 or 13, wherein the weakened material portion (12) is optionally removed and preferably a part (S), such as for example a screw, is inserted into, or a part, such as for example a cable, is passed through, the through-opening (13) thus produced.

## Revendications

1. Procédé pour la production d'une section de matériau affaiblie (12) dans un composant (1), présentant les étapes suivantes :
• mise à disposition d'un composant (1) comportant au moins une section à paroi mince (2),
• emboutissage profond d'une section estampée (11) de la section à paroi mince (2) à partir d'un plan de composant (E) de la section à paroi mince (2) à l'aide d'un poinçon (20) dans une direction d'emboutissage profond (T) perpendiculaire au plan de composant (E) de la section à paroi mince (2),
• formage du composant (1) de telle sorte que la section estampée (11) emboutie profondément est ramenée dans le plan de composant (E) de la section à paroi mince (2),
**caractérisé en ce que**
le formage du composant s'effectue de telle sorte qu'une section de matériau affaiblie (12), comportant sensiblement la forme de section transversale du poinçon (20), est produite dans le composant (1), et
**que** le poinçon (20), vu dans la direction d'emboutissage profond (T), présente une section transversale comportant des saillies (21) et des renfoncements (22) répartis en alternance sur la périphérie.

2. Procédé selon la revendication 1, présentant en outre l'étape de retrait de la section de matériau affaiblie (12) pour la production d'une ouverture de passage (13) dans le composant (1) au moyen d'une pièce (S) à insérer, dans lequel la pièce (S) à insérer est de préférence, au choix :
• un outil, tel qu'un foret, ou
• un moyen de retenue, tel qu'une vis (S) et en particulier une vis autotaraudeuse, dans lequel, lors du vissage d'une vis (S), de préférence un filetage (G) de la vis (S) forme une liaison par complémentarité de forme et/ou à force avec l'ouverture de passage (13), de préférence avec des sections en saillie (14) produites par les renfoncements (22) du poinçon (20) et/ou avec des sections en renfoncement (15) produites par les saillies (21) du poinçon (20), et/ou découpe un filetage dans l'ouverture de passage (13).

3. Procédé selon la revendication 2, dans lequel un centrage pour la pièce à insérer est mis à disposition par les sections en saillie (14) et/ou par les sections en renfoncement (15).

4. Procédé selon l'une des revendications précédentes, dans lequel le composant (1), au moins la section à paroi mince (2) dudit composant, est fabriqué en métal, de préférence présente une tôle (10) ou est fabriqué à partir d'une tôle (10), dans lequel la tôle (10) est de préférence une tôle fine ou une tôle forte.

5. Procédé selon l'une des revendications précédentes, dans lequel le composant (1), au moins la section à paroi mince (2) dudit composant, est fabriqué en matière plastique, de préférence en polycarbonate, et/ou par un procédé de moulage par injection, et/ou est une plaque (10) ou un corps de composant.

6. Procédé selon l'une des revendications précédentes, présentant en outre l'étape consistant à :
• former le composant (1), de préférence la tôle (10) ou la plaque en matière plastique (10), pour la production d'un corps de composant, tel qu'un boîtier de luminaire, au moyen d'un procédé de cintrage ou d'un procédé d'estampage-cintrage.

7. Procédé selon l'une des revendications précédentes, dans lequel le poinçon (20) présente une section transversale à symétrie cyclique, à symétrie spéculaire, en forme d'étoile, en forme d'onde, en forme de roue dentée ou en forme de croix.

8. Procédé selon l'une des revendications précédentes, dans lequel des sommets (23) des saillies (21), vus en section transversale du poinçon (20), sont tous situés sur la même ligne annulaire (R1), telle qu'une ligne circulaire, une ligne elliptique ou une ligne ovale, et/ou
dans lequel des creux (24) des renfoncements (22), vus en section transversale du poinçon (20), sont tous situés sur la même ligne annulaire (R2), telle qu'une ligne circulaire, une ligne elliptique ou une ligne ovale.

9. Procédé selon l'une des revendications précédentes, dans lequel le poinçon (20) présente un diamètre moyen allant de 0,5 mm à 50 mm et/ou dans lequel le poinçon (20) présente un rayon R allant de 0,3 mm à 30 mm dans la zone des saillies (21).

10. Procédé selon l'une des revendications précédentes, dans lequel la section de matériau affaiblie (12) présente de préférence, en son endroit le plus étroit, un diamètre d, de préférence un diamètre moyen, allant de 0,3 mm à 50 mm.

11. Procédé selon l'une des revendications précédentes, dans lequel le composant (1), de préférence au moins la section à paroi mince (2) dudit composant, présente une épaisseur de matériau x allant de 0,1 mm à 5 mm, de préférence de 0,2 mm à 3 mm, de manière particulièrement préférée de 0,3 mm à 2 mm et le plus préférablement de 0,5 mm à 1 mm.

12. Composant (1) fabriqué selon un procédé selon la revendication 7, comportant au moins une section de matériau affaiblie (12) correspondante.

13. Composant (1) selon la revendication 12, comportant un corps de composant, tel qu'un boîtier de luminaire, fabriqué à partir de la tôle (10) au moyen d'un procédé de cintrage ou d'un procédé d'estampage-cintrage, ou fabriqué en matière plastique, de préférence au moyen d'un procédé de moulage par injection.

14. Système de composant (100), tel qu'un luminaire, présentant un composant (1) selon la revendication 12 ou 13, dans lequel la section de matériau affaiblie (12) est sélectivement retirée et, de préférence, une pièce (S), telle que par exemple une vis, est insérée ou, telle qu'un câble, est passée dans l'ouverture de passage (13) ainsi produite.
